**Europäisches Patentamt**

**European Patent Office**

**Office européen des brevets**

(19)

(11) Veröffentlichungsnummer : **0 039 768**
**B1**

(12) **EUROPÄISCHE PATENTSCHRIFT**

(45) Veröffentlichungstag der Patentschrift :
**18.01.84**

(51) Int. Cl.³ : **G 03 B 21/56**

(21) Anmeldenummer : **81102272.2**

(22) Anmeldetag : **26.03.81**

(54) **Projektionsschirmeinrichtung.**

(30) Priorität : **14.05.80 DE 3018449**

(43) Veröffentlichungstag der Anmeldung :
**18.11.81 Patentblatt 81/46**

(45) Bekanntmachung des Hinweises auf die Patenterteilung : **18.01.84 Patentblatt 84/03**

(84) Benannte Vertragsstaaten :
**AT CH FR GB IT LI NL SE**

(56) Entgegenhaltungen :
**DE-A- 1 945 486**
**DE-A- 2 138 340**
**DE-B- 2 750 891**
**US-A- 2 974 564**

(73) Patentinhaber : **Dr. Johannes Heidenhain GmbH**
**Nansenstrasse 17**
**D-8225 Traunreut (DE)**

(72) Erfinder : **Huber, Erich, Ing. grad.**
**Haus-Nr. 4**
**D-8221 Schönberg/Gemeinde Kienberg (DE)**

Jouve, 18, rue St-Denis, 75001 Paris, France

Projektionsschirmeinrichtung

Die Erfindung betrifft eine Projektionsschirmeinrichtung für die Durchlichtbeobachtung von Bildern, mit zwei unmittelbar parallel zueinander angeordneten, relativ zueinander beweglichen optischen Elementen zur Vermeidung von Flimmereffekten.

Derartige Projektionsschirmeinrichtungen sind bereits bekannt. Sie weisen jedoch den Nachteil auf, daß das Bild auf der Streuscheibe durch ein vielfarbiges Flimmern stark beeinträchtigt wird.

Zur Beseitigung dieses Flimmereffekts ist vorgeschlagen worden, die Streuscheibe rotieren zu lassen ; nachteilig erweist sich hierbei die relativ hohe Winkelgeschwindigkeit, um die Visionspersistenz des Auges zu überschreiten.

Aus der DE-A-19 45 486 ist ein Projektionsschirm bekannt, der aus zwei unmittelbar übereinander angeordneten und relativ zueinander bewegten Streuscheiben besteht. Diese Anordnung besitzt aber den Nachteil, daß die zweite Streuscheibe eine relativ große Lichteinbuße hervorruft.

Projektionsschirme mit zwei gegenseitig bewegbaren Streuscheiben unterschiedlichen Streuvermögens sind aus der DE-A-21 38 340 bekannt. Diese Einrichtung beseitigt zwar den Flimmereffekt, die Lichteinbuße aber nur in einem bestimmten Ausmaße.

In der DE-B-27 50 891 ist eine Projektionsschirmeinrichtung dargestellt, bei der parallel zu einer Streuscheibe eine Fresnellinse zur Erzielung einer optimalen Bildhelligkeit angeordnet ist. Da hierbei keine Relativbewegung zwischen Streuscheibe und Fresnellinse stattfindet, wird der Flimmereffekt nicht beseitigt.

Der Erfindung liegt die Aufgabe zugrunde, eine Projektionsschirmeinrichtung der oben erwähnten Gattung anzugeben, bei der besagter Flimmereffekt ohne nennenswerte Lichteinbuße beseitigt werden kann.

Diese Aufgabe wird erfindungsgemäß dadurch gelöst, daß das eine optische Element ein strukturiertes, bewegtes Abbildungselement zum Abbilden der Austrittspupille eines Projektionsobjektives in Richtung der Eintrittspupille des Beobachters ist und das andere optische Element eine ortsfest hierzu angeordnete Streuscheibe ist.

Die mit der Erfindung erzielten Vorteile sind im wesentlichen darin zu sehen, daß die vorgeschlagenen Maßnahmen eine völlige Beseitigung des störenden Flimmereffekts zeitigen, ohne daß die beweglichen Elemente eine hohe Bewegungsfrequenz aufweisen müssen und ohne daß ein wesentlicher Lichtverlust auftritt.

Vorteilhafte Ausbildungen der Erfindung entnimmt man den Unteransprüchen.

Ausführungsbeispiele der Erfindung sind in der Zeichnung dargestellt und werden im folgenden näher erläutert.

Es zeigen

Figur 1 eine Ansicht einer Projektionsschirmeinrichtung nach der Erfindung mit einer feststehenden Streuscheibe und eine beweglichen Fresnellinse ;

Figur 2 einen vergrößerten Längsschnitt der Projektionsschirmeinrichtung nach Figur 1 ;

Figur 3 eine Ansicht und zwei Querschnitte zweier rechtwinklig gekreuzter zylindrischer Fresnellinsen und

Figur 4 eine Ansicht und zwei Querschnitte einer Fresnellinse, deren parallele Rillenstruktur auf der einen Oberfläche senkrecht zur parallelen Rillenstruktur auf der anderen Oberfläche verläuft.

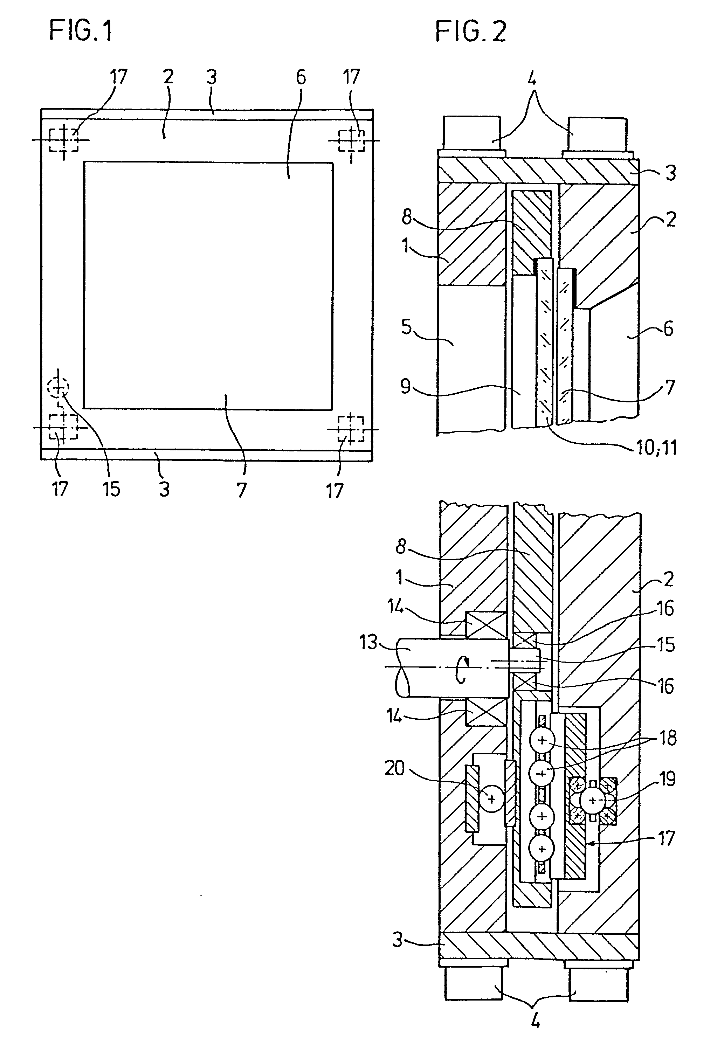

In Figur 1 und 2 ist eine erfindungsgemäße Projektionsschirmeinrichtung gezeigt, bei der zwei rechteckige Platten 1, 2 mittels zweier Traversen 3 und Befestigungselemente 4 parallel starr miteinander verbunden sind. Beide Platten 1, 2 weisen in der Mitte jeweils eine rechteckige Öffnung 5, 6 zur Durchlichtbetrachtung von Bildern auf, die auf einer die Öffnung 6 der Platte 2 verschließenden rechteckigen Streuscheibe 7 mittels einer nicht gezeigten Projektionseinrichtung abgebildet werden. Zwischen den beiden Platten 1, 2 ist eine weitere rechteckige Platte 8 beweglich angeordnet, die in einer mit den Öffnungen 5, 6 korrespondierenden Öffnung 9 eine Fresnellinse 10, 11 bzw. eine Platte mit einer Wabenstruktur (schematisch dargestellt) aufweist.

Die mittlere Platte 8 erfährt von einem nicht gezeigten Motor eine periodische translatorische Bewegung in zwei Richtungen parallel zur Streuscheibe 7 über eine in Lagern 14 gelagerte Welle 13, deren Exzenter 15 die Platte 8 über Lager 16 antreibt. Diese zweidimensionale periodische translatorische Bewegung der Platte 8 wird durch eine zweidimensionale Linearführung 17 bewirkt, die aus einer linearen Längsführung 18, einer linearen Querführung 19 und einem zweidimensionalen Gegenlager 20 besteht. Die Relativbewegung zwischen der Streuscheibe 7 und der Fresnellinse 10, 11 bzw. der wabenstrukturierten Platte kann regelbar sein.

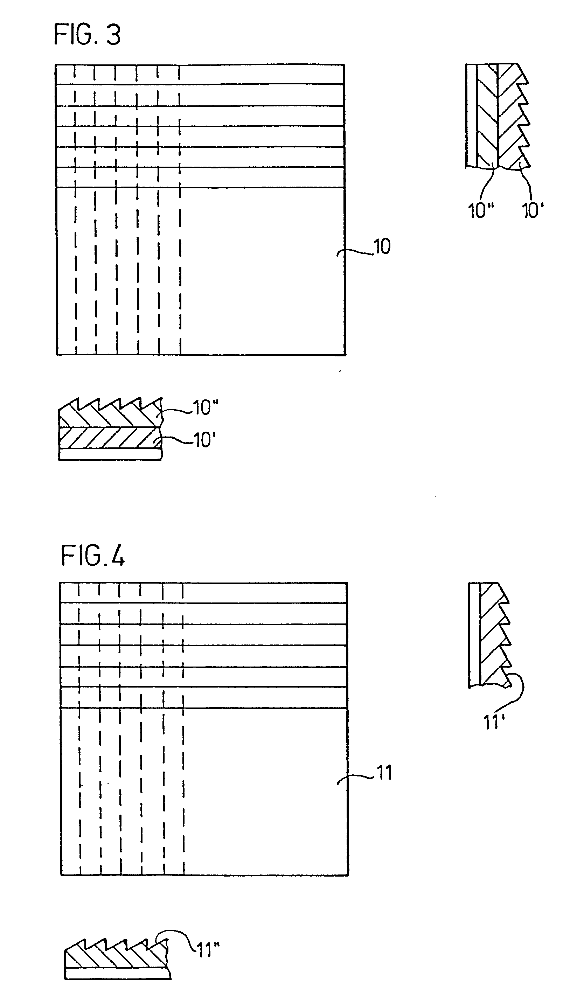

Die Fresnellinse 10 nach Figur 3 besteht aus zwei rechtwinklig gekreuzten zylindrischen Fresnellinsen 10', 10'' mit paralleler Rillenstruktur. Die Fresnellinse 11 nach Figur 4 besitzt eine parallele Rillenstruktur 11' auf der einen Oberfläche, die senkrecht zu einer parallelen Rillenstruktur 11'' auf der anderen Oberfläche verläuft. Die Rillenstrukturen 11', 11'' bewirken jeweils eine zylindrische Abbildung, die senkrecht zueinander stehen.

Des weiteren wird eine nicht dargestellte Fresnellinse vorgeschlagen, die auf einer Oberfläche zwei parallele, senkrecht zueinander verlaufende Rillenstrukturen aufweist, die ebenfalls jeweils eine zylindrische Abbildung bewirken. Bei der Platte mit Wabenstruktur auf einer Oberfläche besteht die Wabenstruktur beispielsweise aus kleinen Prismen oder Linsen.

Ferner kann auch eine Projektionsschirmeinrichtung in nicht dargestellter Weise eine feststehende Streuscheibe und eine parallel dazu exzentrisch rotierende Fresnellinse aufweisen.

Vorzugsweise ist die streuende Oberfläche der Streuscheibe 7 den strukturierten Oberflächen der Fresnellinse 10, 11 bzw. der wabenstrukturierten Platte zugewandt, wobei die Streuscheibe 7 in Projektionsrichtung hinter diesen angeordnet ist.

Die Streuscheibe 7 kann beispielsweise aus Glas und die Fresnellinse 10, 11 bzw. die wabenstrukturierte Platte aus Glas oder Acrylkunststoff bestehen.

**Ansprüche**

1. Projektionsschirmeinrichtung für die Durchlichtbeobachtung von Bildern, mit zwei unmittelbar parallel zueinander angeordneten, relativ zueinander beweglichen optischen Elementen zur Vermeidung von Flimmereffekten, dadurch gekennzeichnet, daß das eine optische Element ein strukturiertes, dewegtes Abbildungselement (10, 11) zum Abbilden der Austrittspupille eines Projektionsobjektives in Richtung der Eintrittspupille des Beobachters ist und das andere optische Element eine ortsfest hierzu angeordnete Streuscheibe (7) ist.

2. Einrichtung nach Anspruch 1, dadurch gekennzeichnet, daß das strukturierte Abbildungselement von einer Fresnellinse gebildet wird.

3. Einrichtung nach Anspruch 2, dadurch gekennzeichnet, daß das strukturierte Abbildungselement (10) von zwei rechtwinklig gekreuzten zylindrischen Fresnellinsen (10' 10'') gebildet wird.

4. Einrichtung nach Anspruch 2, dadurch gekennzeichnet, daß das strukturierte Abbildungselement (11) von einer Fresnellinse gebildet wird, deren parallele Rillenstruktur (11') auf der einen Oberfläche senkrecht zur parallelen Rillenstruktur (11'') auf der anderen Oberfläche verläuft.

5. Einrichtung nach Anspruch 1, dadurch gekennzeichnet, daß das strukturierte Abbildungselement aus einer Platte mit einer abbildenden Wabenstruktur auf einer Oberfläche besteht.

6. Einrichtung nach Anspruch 5, dadurch gekennzeichnet, daß die Wabenstruktur aus kleinen Prismen besteht.

7. Einrichtung nach Anspruch 5, dadurch gekennzeichnet, daß die Wabenstruktur aus kleinen prismatischen Linsen besteht.

8. Einrichtung nach Anspruch 1, dadurch gekennzeichnet, daß das strukturierte Abbildungselement (10, 11) parallel zur Streuscheibe (7) eine zweidimensionale periodische translatorische Bewegung erfährt.

9. Einrichtung nach Anspruch 8, dadurch gekennzeichnet, daß das strukturierte Abbildungselement parallel zur Streuscheibe eine exzentrische rotierende Bewegung erfährt.

10. Einrichtung nach Anspruch 1, dadurch gekennzeichnet, daß die Relativbewegung zwischen Streuscheibe (7) und strukturiertem Abbildungselement (10, 11) regelbar ist.

11. Einrichtung nach Anspruch 1, dadurch gekennzeichnet, daß die streuende Oberfläche der Streuscheibe (7) der strukturierten Oberfläche der Abbildungselemente (10, 11) zugewandt ist.

12. Einrichtung nach Anspruch 1, dadurch gekennzeichnet, daß das strukturierte Abbildungselement (10, 11) in Projektionsrichtung vor der Streuscheibe (7) angeordnet ist.

13. Einrichtung nach Anspruch 1, dadurch gekennzeichnet, daß die Streuscheibe (7) aus Glas und das Abbildungselement (10, 11) aus Glas oder Acrylkunststoff besteht.

**Claims**

1. Projection-screen device for viewing images in transmitted light, this device possessing two optical elements for the purpose of avoiding shimmer-effects, these optical elements being arranged in close proximity and parallel to one another, and being capable of movement relative to one another, characterised in that one of the optical elements is a textured image-forming element (10, 11) which is moved, this element (10, 11) being designed to form an image of the exit pupil of a projection lens in the direction of the entry pupil of the observer, and the other optical element is a diffusing screen (7), which is located at a fixed position relative to the entry pupil of the observer.

2. Device according to Claim 1, characterised in that the textured image-forming element is formed by a Fresnel lens.

3. Device according to Claim 2, characterised in that the textured image-forming element (10) is formed by two cylindrical Fresnel lenses (10', 10''), which are crossed at right-angles.

4. Device according to Claim 2, characterised in that the textured image-forming element (11) is formed by a Fresnel lens, the parallel groove-texture (11') of this lens running, on one of the surfaces, at right-angles to the parallel groove-texture (11'') on the other surface.

5. Device according to Claim 1, characterised in that the textured image-forming element is composed of a plate which possesses an image-forming honeycomb texture on one surface.

6. Device according to Claim 5, characterised in that the honeycomb texture is composed of small prisms.

7. Device according to Claim 5, characterised in that the honeycomb texture is composed of small prismatic lenses.

8. Device according to Claim 1, characterised in that the textured image-forming element (10, 11) is subjected to a two-dimensional, periodic translatory movement, parallel to the diffusing screen (7).

9. Device according to Claim 8, characterised in that the textured image-forming element is subjected to an eccentric rotating movement, parallel to the diffusing screen.

10. Device according to Claim 1, characterised in that it is possible to adjust the movement of the textured image-forming element (10, 11) relative to the diffusing screen (7).

11. Device according to Claim 1, characterised in that the diffusing surface of the diffusing screen (7) is arranged to face the textured surface of the image-forming elements (10, 11).

12. Device according to Claim 1, characterised in that the textured image-forming element (10, 11) is arranged, in the projection direction, in front of the diffusing screen (7).

13. Device according to Claim 1, characterised in that the diffusing screen (7) is composed of glass, and the image-forming element (10, 11) is composed of glass, or of acrylic plastic.

**Revendications**

1. Dispositif à écran de projection pour l'observation d'images par transmission, comportant deux éléments optiques disposés directement parallèlement entre eux et mobiles l'un par rapport à l'autre pour supprimer les effets de scintillement, caractérisé par le fait que l'un des éléments optiques est un élément de reproduction (10, 11) structuré et animé pour reproduire la pupille de sortie d'un objectif de projection dans le sens de la pupille d'entrée de l'observateur et que l'autre élément optique est un diffuseur (7) disposé fixe par rapport au premier.

2. Dispositif selon la revendication 1, caractérisé par le fait que l'élément de reproduction structuré est formé par une lentille de Fresnel.

3. Dispositif selon la revendication 2, caractérisé par le fait que l'élément de reproduction structuré (10) est formé par deux lentilles de Fresnel cylindriques (10', 10") croisées à angle droit.

4. Dispositif selon la revendication 2, caractérisé par le fait que l'élément de reproduction structuré (11) est formé par une lentille de Fresnel dont la structure rainurée parallèle (11') de l'une des surfaces est disposée perpendiculairement à la structure rainurée parallèle (11") de l'autre surface.

5. Dispositif selon la revendication 1, caractérisé par le fait que l'élément de reproduction structuré est constitué par une plaque ayant une structure de reproduction en nid d'abeilles sur une surface.

6. Dispositif selon la revendication 5, caractérisé par le fait que la structure en nid d'abeilles est constituée de petits prismes.

7. Dispositif selon la revendication 5, caractérisé par le fait que la structure en nid d'abeilles est constituée de petites lentilles prismatiques.

8. Dispositif selon la revendication 1, caractérisé par le fait que l'élément de reproduction structuré (10, 11) est animé d'un mouvement de translation périodique bidimensionnel parallèlement au diffuseur (7).

9. Dispositif selon la revendication 8, caractérisé par le fait que l'élément de reproduction structuré est animé d'un mouvement de rotation excentrique parallèlement au diffuseur.

10. Dispositif selon la revendication 1, caractérisé par le fait que le mouvement relatif entre le diffuseur (7) et l'élément de reproduction structuré (10, 11) est réglable.

11. Dispositif selon la revendication 1, caractérisé par le fait que la surface dispersive du diffuseur (7) est tournée vers la surface structurée des éléments de reproduction (10, 11).

12. Dispositif selon la revendication 1, caractérisé par le fait que l'élément de reproduction structuré (10, 11) est placé devant le diffuseur (7) vu dans le sens de la projection.

13. Dispositif selon la revendication 1, caractérisé par le fait que le diffuseur (7) est en verre et que l'élément de reproduction (10, 11) est en verre ou en matière plastique acrylique.

FIG.1   FIG.2

0 039 768

1

## FIG. 3

## FIG.4